(19) Europäisches Patentamt / European Patent Office / Office européen des brevets

(11) **EP 2 350 682 B1**

(12) **FASCICULE DE BREVET EUROPEEN**

(45) Date de publication et mention
de la délivrance du brevet:
**18.03.2015 Bulletin 2015/12**

(21) Numéro de dépôt: **09756694.7**

(22) Date de dépôt: **27.10.2009**

(51) Int Cl.:
***G01S 19/08*** *(2010.01)*     ***G01S 19/02*** *(2010.01)*
***G01S 19/22*** *(2010.01)*

(86) Numéro de dépôt international:
**PCT/EP2009/064154**

(87) Numéro de publication internationale:
**WO 2010/049422 (06.05.2010 Gazette 2010/18)**

(54) **PROCEDE DE CORRECTION D'ERREURS DE PREDICTION DE VALEURS DE SIGNAUX A EVOLUTION TEMPORELLE PERTURBES PAR DIVERS PHENOMENES SYSTEMATIQUES NON MAITRISABLES**

VERFAHREN ZUR KORREKTUR VON PRÄDIKTIONSFEHLERN VON SIGNALWERTEN MIT ZEITLICHER SCHWANKUNG UNTER DEM EINFLUSS VON STÖRUNGEN DURCH VERSCHIEDENE UNKONTROLLIERBARE SYSTEMATISCHE EFFEKTE

METHOD FOR CORRECTING PREDICTION ERRORS OF SIGNAL VALUES WITH TIME VARIATION SUBJECTED TO INTERFERENCE BY VARIOUS UNCONTROLLABLE SYSTEMATIC EFFECTS

(84) Etats contractants désignés:
**AT BE BG CH CY CZ DE DK EE ES FI FR GB GR HR HU IE IS IT LI LT LU LV MC MK MT NL NO PL PT RO SE SI SK SM TR**

(30) Priorité: **28.10.2008 FR 0805982**

(43) Date de publication de la demande:
**03.08.2011 Bulletin 2011/31**

(73) Titulaire: **THALES**
**92200 Neuilly-sur-Seine (FR)**

(72) Inventeur: **VAN DEN BOSSCHE, Mathias**
**F-31120 Goyrans (FR)**

(74) Mandataire: **Esselin, Sophie et al**
**Marks & Clerk France**
**Conseils en Propriété Industrielle**
**Immeuble Visium**
**22, Avenue Aristide Briand**
**94117 Arcueil Cedex (FR)**

(56) Documents cités:
**EP-A- 1 675 294     US-A1- 2003 062 479**
**US-A1- 2003 191 634     US-B1- 6 262 943**
**US-B1- 6 263 281**

Il est rappelé que: Dans un délai de neuf mois à compter de la publication de la mention de la délivrance du brevet européen au Bulletin européen des brevets, toute personne peut faire opposition à ce brevet auprès de l'Office européen des brevets, conformément au règlement d'exécution. L'opposition n'est réputée formée qu'après le paiement de la taxe d'opposition. (Art. 99(1) Convention sur le brevet européen).

**Description**

La présente invention se rapporte à un procédé de correction de prédiction de valeurs de signaux à évolution temporelle perturbés par divers phénomènes systématiques non maîtrisables.

Les messages de navigation envoyés par les systèmes globaux de navigation par satellites (tels que Galileo, GPS,...) avec leurs systèmes ajoutés qui en augmentent l'intégrité (EGNOS, WAAS,...) comportent également des informations de prédiction d'orbite de ces satellites et de temps de référence. A l'aide de ces prédictions, les utilisateurs de ces services de navigation calculent leur position estimée à partir de mesures de pseudo-distances

Toute erreur affectant ces prédictions entraîne une erreur sur la valeur de la position géographique de l'utilisateur ainsi déterminée. Dans le cas de services pour lesquels la sécurité est une question vitale, on prévoit un segment de surveillance d'intégrité de l'intégrité des utilisateurs via le contrôle de la validité des prédictions, et de diffuser l'information d'intégrité (indicateurs d'intégrité tels que SISA/SISMA pour Galileo ou UDRE pour EGNOS/WAAS, qui est une surcouche européenne pour le système GPS). Les utilisateurs prennent en compte ces indicateurs afin d'estimer le risque que l'erreur affectant la position indiquée soit supérieure à un seuil d'alarme. La standardisation et la certification de ces indicateurs et des algorithmes de leur mise en oeuvre sont actuellement en cours.

L'un des principaux problèmes relevés par la communauté des spécialistes en navigation par satellites est qu'avec les standards actuels, l'intégrité des mesures ne peut être obtenue qu'à la condition mathématique impérative que la distribution des erreurs ne soit pas affectée d'effets systématiques, en particulier de biais. Si tel n'est pas le cas, même si on maîtrise individuellement les erreurs de chaque satellite via un niveau de majoration diffusé aux usagers, l'erreur résultante au niveau de l'utilisateur peut ne pas être maîtrisée.

Etant donné que la largeur de bande des canaux de diffusion de données de navigation est strictement limitée, il est impossible de diffuser plus d'un paramètre de caractérisation d'erreur de prédiction d'orbite et d'horloge.

Pour résoudre ce problème, on a essayé d'augmenter artificiellement les indicateurs d'intégrité de façon à améliorer le niveau de majoration de la distribution des erreurs de prédiction. Cependant, cette augmentation artificielle influe grandement sur la disponibilité du service d'intégrité, car elle entraîne de nombreuses fausses alarmes. On en est donc venu à améliorer la qualité des corrections des données d'orbite et d'horloge.

Les limitations inhérentes à la qualité des prédictions ne sont pas toujours clairement identifiées. De nombreux facteurs peuvent être la cause de cette limitation. On citera en particulier :

- l'imprécision du modèle du champ de gravitation de la Terre,
- le fait de négliger les effets des marées d'ordre supérieur ou les effets à corps multiples (par exemple les autres planètes du système solaire),
- algorithmes d'extrapolation des observations en prédictions insuffisamment éprouvés,
- instabilité du matériel de génération des signaux de navigation embarqué,
- imprécision de la modélisation de l'effet de pression de radiation solaire,
- imprécision des données de masse du satellite, de la position de son centre de gravité,...
- ainsi que d'autres facteurs non identifiés actuellement.

La plupart des facteurs cités ci-dessus sont soit inhérents à des limitations de l'état de l'art (les quatre premiers), soit sujets à des dérives des paramètres tout au long de la durée de vie du satellite (les trois derniers). Les solutions actuelles mises en oeuvre pour réduire l'impact de ces facteurs sont surtout les suivantes :

- amélioration de la précision des données géophysiques, par exemple amélioration de la qualité des modèles de champ de gravitation terrestre ou des marées,
- amélioration de la précision des données relatives à l'état courant du satellite,
- amélioration des performances des circuits de calcul afin de leur permettre de calculer un plus grand nombre de données avec une plus grande précision pour des processus itératifs de plus grande longueur,
- amélioration de la stabilité des matériels embarqués (par contrôle thermique, perfectionnement des circuits électroniques,...),

Toutes ces solutions connues présentent des limitations, en particulier:

- la précision des données géophysiques ne peut être améliorée qu'au rythme, relativement lent, de l'exploitation des résultats des missions scientifiques,
- la précision des données relatives aux équipements et aux constituants du satellite est très limitée du fait de la possibilité très limitée de leur observation après le lancement du satellite. Par exemple, c'est le cas de paramètres tels que la réflectivité optique du satellite suite à la dégradation inévitable de son revêtement extérieur réfléchissant qui joue un rôle prépondérant dans l'effet de la pression de radiation solaire,

- on ne peut pas améliorer les performances de calcul plus rapidement que l'on améliore les performances des circuits intégrés, qui peuvent bientôt arriver à leur niveau maximal lorsque leur miniaturisation atteindra l'échelle atomique.

Le document US 2003/191634 décrit un procédé de correction des prédictions d'un signal audio perturbé par des erreurs systématiques, notamment des bruits et interférences périodiques.

La présente invention a pour objet un procédé de correction de prédiction de valeurs de signaux à évolution temporelle perturbés par divers phénomènes systématiques non maîtrisables, procédé qui ne soit pas sujet aux limitations citées ci-dessus et qui soit facile à mettre en oeuvre.

Le procédé conforme â l'invention est caractérisé en ce qu'il comporte les étapes suivantes pour la correction des prédictions d'un paramètre compris dans un signal reçu et évoluant dans le temps :

- constitution de l'historique de l'erreur de prédiction à partir d'un premier lot de valeurs estimées a posteriori pendant un laps de temps déterminé, avec une précision suffisante (dénommées par la suite : 'valeurs restituées') en comparant ces valeurs restituées à un lot des valeurs précédemment prédites pour le même laps de temps déterminé,
- analyse des séries temporelles prédites d'erreurs de prédiction par un procédé de traitement de signal et isolation des contributions des effets systématiques,
- extrapolation à un nouveau laps de temps de prédiction du comportement des contributions des effets systématiques pendant le laps de temps en question et correction des prédictions à l'aide des valeurs ainsi extrapolées.

La présente invention sera mieux comprise à la lecture de la description détaillée d'un mode de réalisation, pris à titre d'exemple non limitatif et illustré par le dessin annexé, sur lequel :

- la figure 1 est un chronogramme illustrant un exemple simplifié d'un lot de valeurs obtenues à partir de mesures reçues et de valeurs prédites correspondantes, selon le procédé de l'invention,
- la figure 2 est un chronogramme d'évolution des erreurs de prédiction sur les valeurs prédites de la figure 1, et
- la figure 3 est un diagramme dans le plan de Fourier illustrant les effets systématiques entraînant des erreurs de prédiction.

La présente invention est décrite ci-dessous en référence aux signaux reçus d'un satellite de radionavigation, mais il est bien entendu qu'elle n'est pas limitée à cette seule application, et qu'elle peut être mise en oeuvre dans diverses applications dans lesquelles on reçoit des signaux devant évoluer temporellement de façon au moins partiellement non aléatoire et pouvant être perturbés par diverses causes systématiques, et pour lesquelles on dispose d'un historique d'évolution de ces signaux perturbateurs.

La présente invention est basée sur le fait qu'un algorithme précis de prédiction d'orbite fonctionne en mode de traitement par lots (traitement d'un grand nombre de valeurs consécutives contenues dans un laps de temps ou « arc »), sa première étape étant obligatoirement l'estimation précise des paramètres de position et d'orbite d'un satellite le long d'un arc d'estimation relatif au passé. Les positions estimées sont ensuite extrapolées pour une période de prédiction afin de fournir les prédictions des paramètres d'orbite.

Dans le cas présent, les périodes utilisées pour la détermination des prédictions sont toujours en chevauchement avec un ou plusieurs arcs d'estimation utilisés dans les derniers arcs du traitement de prédiction. En outre, la précision des valeurs restituées est bien plus élevée que celle des valeurs prédites. La comparaison (à savoir leur différence) de ces deux sortes de valeurs est significative des défauts de la méthode prédictive. Des procédés connus de traitement de signal peuvent être appliqués aux séries temporelles de ces différences en vue d'extrapoler le comportement des défauts et de les corriger avant même qu'ils produisent leurs effets.

Le procédé de l'invention permet de réduire significativement les effets systématiques potentiels (du type de ceux cités ci-dessus) grâce à leur observation dans le passé, ce qui conduit à des distributions d'erreurs de prédiction bien plus appropriées aux besoins des normes du calcul d'intégrité.

Le procédé de l'invention est mis en oeuvre de la façon suivante.

Soit X(t) un paramètre quelconque, dépendant du temps, qui peut être relatif à l'horloge ou à l'orbite d'un satellite. Ce paramètre X peut être soit un point de l'orbite de ce satellite avec X= x, y ou z qui sont les coordonnées spatiales de X , soit être défini par X=$\delta$t, c'est-à-dire l'offset (ou décalage) de l'horloge du satellite. Le procédé de l'invention comporte les trois étapes principales suivantes :

- estimation de l'erreur de prédiction,
- analyse des facteurs affectant systématiquement l'erreur de prédiction,
- correction des prédictions.

Dans le détail, ces étapes sont exposées ci-dessous. Tout d'abord, on estime l'erreur de prédiction à partir de deux lots de valeurs de prédiction.

## A- premier lot de valeurs de prédiction.

Le calcul de l'orbite d'un satellite commence par un relevé de mesures sur un arc d'estimation $E_1 = [t_{b,1}, t_{e,1}]$ relativement long (le plus souvent quelques jours à quelques semaines). Cet arc d'estimation est utilisé pour estimer les valeurs restituées telles que restituées par les circuits de calcul classiques des instruments d'orbitographie et de synchronisation du paramètre X. Soit $X_{r1}(t)$ la fonction permettant d'obtenir les valeurs restituées de ce paramètre pendant le laps de temps $t \in E_1$. Les détails du procédé de restitution importent peu dans le cadre de l'invention, et il est uniquement nécessaire de disposer de $X_{r1}(t)$ pendant la durée de l'arc $E_1$. Ces valeurs restituées peuvent d'ailleurs provenir d'une source différente du circuit de calcul de la prédiction.

Les valeurs restituées sont liées à l'estimation de certains paramètres (paramètres d'orbite, paramètres de la rotation de la Terre, modèle de réflectivité du satellite,...) pouvant être utilisés pour calculer les valeurs de X à des instants postérieurs à $t_{e,1}$ ($t_{e,1}$ étant le début de $P_1$). Soient $X_{p1}(t)$ les valeurs obtenues de cette façon pour :

$$t \in P_l = [t_{e,1}, t_{p,1}]$$

dans cette expression, $t_{p,1}$ est le dernier instant de prédiction. Ces valeurs de $X_{p1}(t)$ fournissent une première prédiction du paramètre en question. On remarquera encore ici que peu importe pour l'invention les détails de la façon dont on met en oeuvre le procédé de prédiction, et il est uniquement nécessaire de disposer de $X_{p1}(t)$ pendant la durée de l'arc $P_1$.

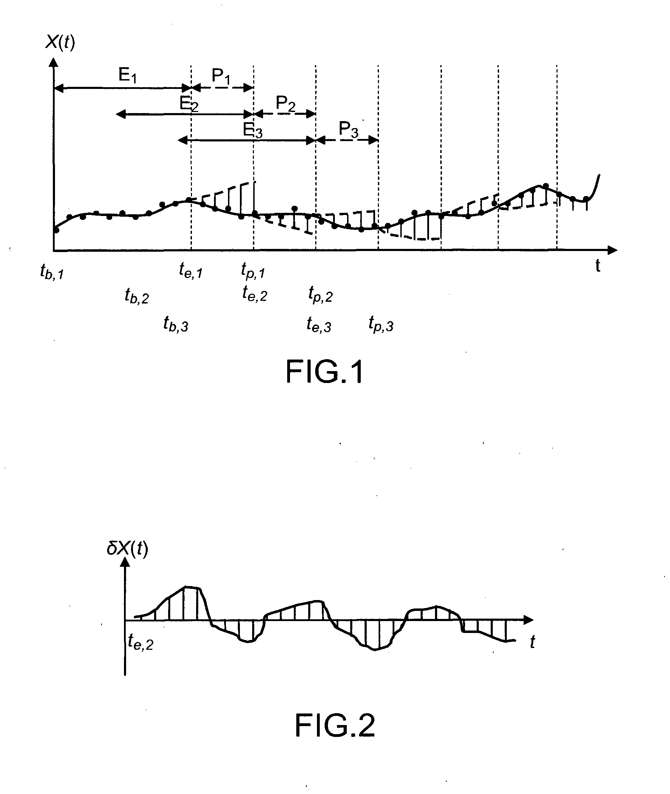

On a représenté en figure 1 l'évolution temporelle des arcs d'estimation ($E_1$, $E_2$, $E_3$,...) et des arcs de prédiction correspondants ($P_1$, $P_2$, $P_3$,...). Sur ce diagramme temporel, la courbe en trait plein représente les valeurs *restituées* de X, alors que les segments de courbes en traits interrompus se rapportent aux valeurs *prédites* de X. Sur la figure 2, les points définissant la courbe en trait plein correspondent aux erreurs de prédiction de X obtenues comme la différence entre les valeurs de *prédites* et les valeurs *restituées* de *X* aux mêmes instants.

## B- deuxième lot de valeurs de prédiction.

Pour le lot suivant de valeurs de prédiction d'orbite, on répète les opérations précédentes pour un deuxième arc de d'estimation $E_2 = [t_{b,2}, t_{e,2}]$ avec $t_{e,2} \le t_{p,1}$.

En outre, la plupart du temps, on a : $t_{b,2} \le t_{e,1}$ du fait que les arcs d'estimation doivent être plus longs que les arcs de prédiction afin d'obtenir une bonne qualité de prédiction, et on a alors $P_1 \subset E_2$. Typiquement, mais de façon non limitative, dans la présente application, ces arcs d'estimation peuvent durer de 1 heure à 48 heures. Les mesures effectuées pendant le laps de temps E2 permettent d'obtenir un jeu de valeurs de paramètres restitués d'orbite ou d'horloge $X_{r,2}(t)$ correspondant à cette période $E_2$ et pouvant être propagés pendant la période P2 = $[t_{e,2}, t_{p,2}]$ et obtenir pour cette période des prédictions d'orbite ou d'horloge $X_{p,2}(t)$.

Il est à noter que pour le laps de temps $P_1$, deux valeurs de X sont disponibles du fait que $P_1 \subset E_2$, à savoir $X_{p,1}(t)$ et $X_{r,2}(t)$ pour $[t_{e,1}, t_{p,1}]$. Etant donné que $X_{p,1}$ et $X_{r,2}$ sont tous deux des approximations du même paramètre d'orbite ou d'horloge aux mêmes instants, mais avec bien meilleure précision pour $X_{r,2}$ que pour $X_{p,1}$, on obtient une approximation de l'erreur de prédiction pour le laps de temps P1 par :

$$\delta X(t) = X_{p,1}(t) - X_{r,2}(t) \text{ pour } [t_{e,1}, t_{p,1}] \tag{1}$$

Pour les lots suivants de prédiction, de la même façon que l'on a établi $\delta X(t)$ en comparant la prédiction de X dans le premier lot à sa restitution dans le deuxième, on peut obtenir une estimation de l'erreur de prédiction pour un lot n en comparant la prédiction de $X_{p,n}(t)$ pour ce lot n à la restitution $X_{r,n+1}(t)$ :

$$\delta X(t) = X_{p,n}(t) - X_{r,n+1}(t) \text{ pour } [t_{e,n}, t_{p,n}] \tag{2}$$

Cette succession de lots d'estimation et de prédiction, ainsi que la fonction d'estimation d'erreur de prédiction $\delta X(t)$ ont été représentées sur la figure 2.

En résumé, la première étape principale du procédé de l'invention consiste, pour un lot n+1 de valeurs de prédiction, à construire la série temporelle δX(t) d'erreurs de prédiction pour chaque paramètre X d'orbite ou d'horloge en comparant les valeurs restituées des lots disponibles aux valeurs prédites du (des) lot(s) précédent(s).

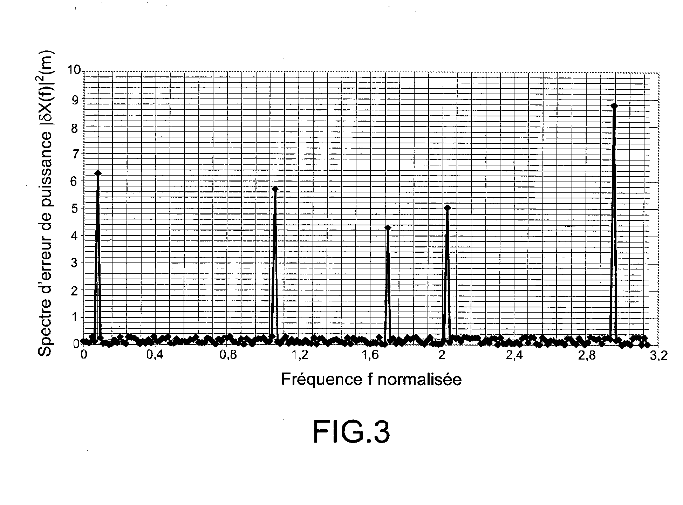

L'étape suivante du procédé de l'invention consiste à isoler les effets systématiques dans l'erreur de prédiction. Les séries temporelles d'erreurs de prédiction fournies par la fonction δX(t), telles que représentées de façon simplifiée en figure 2, comportent toute l'information relative à l'erreur de prédiction. Si cette erreur de prédiction résultait uniquement des erreurs de mesure, la courbe représentant δX(t) aurait une évolution aléatoire. Dans la plupart des cas, ceci n'est pas vrai, et, par exemple, une analyse par ondelettes ou une analyse de Fourier des séries temporelles d'erreurs de prédiction, telle que celle représentée en figure 3, met en évidence les caractéristiques de ces séries temporelles d'erreurs qui font clairement voir qu'il ne s'agit pas d'une évolution purement aléatoire. Ces caractéristiques correspondent à des erreurs systématiques affectant le processus de prédiction, et elles sont dues à la présence d'erreurs dans le modèle utilisé pour prédire l'orbite elle-même ou dues à des limitations du processus de prédiction.

On a représenté en figure 3 un diagramme d'un exemple d'analyse de Fourier donnant le spectre de l'erreur sur la puissances $|\delta X(f)|^2$ en fonction de la fréquence normalisée f. Dans cet exemple, les composantes du spectre dont la valeur est nettement supérieure à la valeur moyenne du spectre (les cinq impulsions étroites visibles sur le diagramme) peuvent être attribuées aux effets systématiques. Ces composantes correspondent, dans le cas de l'analyse de Fourier, aux contributions $\delta X_{s,i}(t) = A(i)e^{j\omega i(t)}$ pour différentes valeurs remarquables de $\omega(i)$ dans le spectre en question.

En résumé, la deuxième étape principale du procédé de l'invention consiste à analyser les séries temporelles d'erreurs de prédiction à l'aide d'une méthode appropriée de traitement de signal (analyse de Fourier, en ondelettes, ou autres méthodes de traitement du signal) et d'isoler les contributions des effets systématiques $\delta X_{s,i}(t)$.

L'étape suivante consiste à effectuer la prédiction et la correction des erreurs de prédiction systématiques. Une fois que l'on a identifié les contributions $\delta X_{s,i}(t)$ des effets systématiques, il est relativement simple d'extrapoler leur comportement temporel pendant le laps de temps de prédiction à venir $P_{n+1}$. Ces contributions peuvent donc être utilisées pour corriger les prédictions dans le lot de prédiction n+1 par soustraction des effets des différentes contributions des valeurs de la fonction δX(t).

En résumé, la troisième étape principale du procédé de l'invention consiste à extrapoler le comportement des contributions des effets systématiques $\delta X_{s,i}(t)$ dans l'intervalle de prédiction considéré et de corriger les prédictions avec ces valeurs de contributions.

On notera que le procédé de l'invention peut être mis en oeuvre pour des prédictions corrigées ou non. D'autre part, les arcs de prédiction (correspondant aux laps de temps $P_1$, $P_2$, $P_3$ représentés en figure 1) sont avantageusement en chevauchement mutuel, mais pas nécessairement.

**Revendications**

**1.** Procédé de correction de prédictions de valeurs d'un paramètre dépendant du temps et relatif à l'orbite ou à l'horloge de référence d'un satellite de radionavigation, ledit paramètre étant compris dans un signal évoluant dans le temps et reçu dudit satellite de radionavigation, ledit procédé comportant les étapes suivantes :

- constitution de l'historique de l'erreur de prédiction à partir d'un premier lot de valeurs dudit paramètre estimées a posteriori ($E_1$) pendant un laps de temps déterminé, dites valeurs restituées, en comparant ces valeurs restituées à un lot de valeurs dudit paramètre précédemment prédites pour le même laps de temps déterminé,
- analyse des séries temporelles prédites d'erreurs de prédiction des valeurs dudit paramètre par un procédé de traitement du signal et isolation des contributions des effets systématiques,
- extrapolation, à un nouveau laps de temps de prédiction, des contributions des effets systématiques identifiés pendant le laps de temps en question ($E_1$) et correction des prédictions dudit paramètre à l'aide des contributions ainsi extrapolées.

**2.** Procédé selon la revendication 1, **caractérisé en ce que** le procédé de traitement de signal est une transformation de Fourier ou par ondelettes.

**3.** Procédé selon la revendication 1 ou 2, **caractérisé en ce que** les laps de temps de prédiction ($P_1$, $P_2$, $P_3$) sont en chevauchement mutuel.

**Patentansprüche**

**1.** Verfahren zur Prädiktionskorrektur von Werten eines zeitabhängigen, zum Orbit oder zur Referenzuhr eines Funknavigationssatelliten relativen Parameters, wobei der Parameter in einem sich zeitlich entwickelnden, von dem Funknavigationssatelliten empfangenen Signal inbegriffen ist, wobei das Verfahren die folgenden Schritte aufweist:

- Erstellen des Prädiktionsfehlerverlaufs auf der Basis einer ersten Partie von während eines bestimmten Zeitraums nachträglich geschätzten Werten des Parameters ($E_1$), auch als rekonstruierte Werte bezeichnet, indem diese rekonstruierten Werte mit einer Partie zuvor für denselben bestimmten Zeitraum vorhergesagter Werte des Parameters verglichen werden,
- Analysieren der vorhergesagten Prädiktionsfehler-Zeitreihen der Werte des Parameters anhand eines Signalverarbeitungsverfahrens und Isolieren der Beiträge der systematischen Effekte,
- Extrapolieren, zu einem neuen Prädiktionszeitraum, der Beiträge der während des fraglichen Zeitraums (E1) festgestellten systematischen Effekte und Korrigieren der Prädiktionen des Parameters mit Hilfe der derart extrapolierten Beiträge.

2. Verfahren nach Anspruch 1, **dadurch gekennzeichnet, dass** das Signalverarbeitungsverfahren eine Fourier- oder Wavelet-Transformation ist.

3. Verfahren nach Anspruch 1 oder 2, **dadurch gekennzeichnet, dass** sich die Prädiktionszeiträume ($P_1$, $P_2$, $P_3$) gegenseitig überlagern.

**Claims**

1. A method for correcting predictions of values of a time-dependent parameter relating to the orbit or to the reference clock of a radio navigation satellite, said parameter being included in a signal that evolves over time and received from said radio navigation satellite, said method comprising the following steps:

- constructing the history of the prediction error based on a first batch of values of said parameter estimated a posteriori ($E_1$) during a determined time period, called restored values, by comparing these restored values to a batch of values of said parameter previously predicted for the same determined time period,
- analyzing the predicted temporal series of errors in the prediction of the values of said parameter by a method for processing the signal and isolating the contributions of the systematic effects,
- extrapolating, to a new prediction time period, the contributions of the systematic effects identified during the time period concerned ($E_1$) and correcting the predictions of said parameter with the aid of the contributions extrapolated in this way.

2. The method according to Claim 1, **characterised in that** the signal processing method is a Fourier or wavelet transform.

3. The method according to Claim 1 or 2, **characterised in that** the prediction time periods ($P_1$, $P_2$, $P_3$) are mutually overlapping.

FIG.1

FIG.2

**FIG.3**

**EP 2 350 682 B1**

## RÉFÉRENCES CITÉES DANS LA DESCRIPTION

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Documents brevets cités dans la description**

- US 2003191634 A